# EUROPÄISCHE PATENTSCHRIFT

(11) **EP 3 721 457 B1**
(45) Veröffentlichungstag und Bekanntmachung des Hinweises auf die Patenterteilung: **22.12.2021**
(21) Anmeldenummer: 18796603.1
(22) Anmeldetag: 23.10.2018
(51) Int. Cl.: H01F 1/01

(54) **VERFAHREN ZUR HERSTELLUNG EINES MAGNETOKALORISCHEN VERBUNDMATERIALS UND EIN ENTSPRECHENDER WÄRMETAUSCHER**
PROCESS FOR PRODUCING A MAGNETOCALORIC COMPOSITE MATERIAL AND A CORRESPONDING HEAT EXCHANGER
PROCÉDÉ DE FABRICATION D'UN MATÉRIAU COMPOSITE MAGNÉTOCALORIQUE ET ÉCHANGEUR DE CHALEUR CORRESPONDANT

(30) Priorität: 04.12.2017 DE 102017128765
(43) Veröffentlichungstag der Anmeldung: 14.10.2020
(73) Patentinhaber: Magnotherm Solutions GmbH, 64287 Darmstadt (DE)
(72) Erfinder: SPECHT, Marius, 64285 Darmstadt (DE); RADULOV, Iliya, 64732 Bad König (DE); BRAUN, Tobias, 63538 Großkrotzenburg (DE); SKOKOV, Konstantin, 64287 Darmstadt (DE); BRABÄNDER, Valentin, 76351 Linkenheim-Hochstetten (DE); GUTFLEISCH, Oliver, 64287 Darmstadt (DE)
(74) Vertreter: Tergau & Walkenhorst Patentanwälte PartGmbB
(86) Internationale Anmeldenummer: PCT/EP2018/079037
(87) Internationale Veröffentlichungsnummer: WO 2019/110193

(56) Entgegenhaltungen:
- WO-A1-2017/077071
- JP-A- 2013 153 165
- US-A- 4 985 072
- US-A1- 2016 161 156

## Beschreibung

Die vorliegende Erfindung bezieht sich auf ein Verfahren zur Herstellung eines magnetokalorischen Verbundmaterials, einen Wärmetauscher mit dem magnetokalorischen Verbundmaterial und insbesondere auf eine Vorbehandlung und Vernickelung von magnetokalorischen Wärmetauschern.

### Hintergrund

Magnetokalorische Materialien wie z.B. La(Fe,Mn,Si)₁₃H, Gadolinium, Fe2P, oder Ni-Mn-In based Heusler Verbindungen sind zunehmend von Interesse für Kühlaggregate, da die durch Ummagnetisierungen erreichbaren Temperaturdifferenz mittlerweile für viele Anwendungen ausreichend ist. Die in den Kühlaggregaten vorhandenen Wärmetauscher werden häufig als Platten aus massivem Ausgangsmaterial gefertigt. Die konventionelle Fertigung dieser Platten ist mit hohen Kosten und Aufwand verbunden, wobei unter Dauerbetrieb das zusätzliche Risiko von Ermüdungsversagen durch Versprödung besteht.

Poröse magnetokalorische Materialien zum Einsatz in Wärmetauschern können als Verbundmaterialien gefertigt werden, wobei in bekannten Verfahren eine Vielzahl von Partikel in einer Polymer- oder Metallmatrix verbunden werden. Partikelförmige magnetokalorische Materialien arbeiten dabei am effektivsten, wenn diese zu einem porösen Körper mit gleichmäßigen Kanälen geformt werden. Bei dieser Fertigung ist es wichtig, eine mechanisch stabile Verbindung mit hoher Wärmeleitfähigkeit und gutem Wärmeübertrag zum Transportmedium (hier: Wasser) zu erreichen.

Bei polymergebundenen Wärmetauschern ist der Wärmeübertrag unzureichend. Bei den metallgebundene Varianten werden niedrige schmelzende Metalllegierungen als Bindematerial verwendet, die in flüssiger Form genutzt werden, um darin die Vielzahl von magnetokalorischen Partikeln einzutauchen und gleichzeitig miteinander zu verbinden. Ein Beispiel für eine solche Verbindung von magnetokalorischen Partikeln ist in der WO 2017/077071 A1 veröffentlicht, wobei die Metalllegierung Bismut, Indium und Zink und optional Blei aufweist. US 2016/161156 A1 offenbart ein Verbundmaterial, in dem magnetokalorische Partikel in einem Bad in einer Polymermatrix verbunden werden.

Das von konventionellen Verfahren resultierende magnetokalorische Verbundmaterial besteht meist aus teuren und teilweise giftigen Komponenten. Außerdem konnte eine vollständige Beschichtung aller Partikel nicht gewährleistet werden. Weitere Probleme dieser Vorgehensweise bestehen in dem beträchtlichen Energieverbrauch zum Schmelzen des metallischen Verbundmaterials und in den Anforderungen an den Formkörper, in dem die geschmolzene Metalllegierung hineingegossen wird.

Es besteht daher ein Bedarf nach alternativen Möglichkeiten, um ein magnetokalorisches Verbundmaterial für Wärmetauscher zu schaffen.

### Zusammenfassung

Zumindest ein Teil der obengenannten Probleme wird durch ein Verfahren zur Herstellung eines magnetokalorischen Verbundmaterials nach Anspruch 1 und durch einen Wärmetauscher nach Anspruch 6 gelöst. Die abhängigen Ansprüche definieren weitere vorteilhafte Ausführungsformen des erfindungsgemäßen Verfahrens.

Die vorliegende Erfindung bezieht sich auf ein Verfahren zur Herstellung eines magnetokalorischen Verbundmaterials für einen Wärmetauscher. Das Verfahren umfasst: Bereitstellen einer Vielzahl von Partikeln aus einem magnetokalorischen Material in einem Formkörper; und Eintauchen der in dem Formkörper vorhandenen Vielzahl von Partikeln in ein Bad, insbesondere ein Nickelbad, um die Partikel in dem Bad durch eine chemische Metallbeschichtung zu einem Verbundmaterial zusammenzufügen. Das Verfahren bezieht sich also nicht nur auf das Vernickeln von Partikeln, sondern insbesondere auch auf eine Formgebung von magnetokalorischen Wärmetauschern (z. B. durch ein Vernickeln).

Optional werden die Partikel mit zumindest einem der folgenden Schritte vorbehandelt:
- Vorbehandeln mit einer Natriumhydroxid-Lösung(NaOH),
- Vorbehandeln mit einer Schwefelsäure (H₂SO₄),
- Vorbehandeln mit einer Salzsäure (Hcl),
wobei optional zwischen jedem Schritt mit Ethanol (C₂H₆O) und/oder Wasser gespült wird.

Optional werden die Vielzahl von Partikeln in N-Methyl2pyrrolidon für zumindest eine Stunde vorbehandelt.

Optional umfasst das Bad zumindest eines der folgenden Stoffe: Ammoniumchlorid (NH₄Cl), Natriumcitrat (Na₃C₆H₅O₇), Nickel(II)-chlorid (NiCl₂) oder andere Metallionen in Form von Verbindungen mit (Chrom, Zink, usw.) und Wasser. Das Verfahren kann außerdem ein Aufwärmen des Bades auf mehr als 50°C oder ungefähr 60°C umfassen.

Optional wird zu dem Bad Ammoniak (NH₃) und anschließend Natriumphosphinat (NaH₂PO₂) hinzugegeben.

Das neue Herstellungsverfahren stellt ebenfalls einen Metall-Verbund dar, wobei dieser aber durch eine chemische Abscheidung von beispielsweise Nickel oder anderen Metallionen erzeugt wird. Dabei können die magnetokalorischen Partikel vollständig beschichtet werden, sind dadurch wesentlich besser geschützt und können somit länger verwendet werden.

Die vorliegende Erfindung bezieht sich auch auf ein einen Wärmetauscher mit einem magnetokalorischen Material, das aus einer Vielzahl von magnetokalorischen Partikeln besteht, die durch eine chemische Vernickelung zu einem Verbundmaterial zusammengefügt sind (z.B. nach dem zuvor definierten Verfahren).

Die eingangs genannten Probleme der konventionellen Verfahren zur Herstellung von magnetokalorischen Verbundmaterialien werden durch Ausführungsbeispiele dadurch überwunden, dass ein chemisches Abscheiden von Nickel genutzt wird, wodurch mechanisch und chemisch stabile Wärmetauscher gefertigt werden können. Im Gegensatz zu den konventionellen Verfahren von Metall- und Polymer-gebundenen Kompositen können mit dem erfindungsgemäßen Verfahren bessere Eigenschaften erreicht werden - insbesondere bei Vernickelung von magnetokalorischen Wärmetauschern aus La(Fe,Mn,Si)₁₃H.

Vorteile von Ausführungsbeispielen bestehen insbesondere darin, dass das hergestellte Verbundmaterial für viele Bereiche einsetzbar ist - insbesondere in Bereichen, wo herkömmliche magnetokalorische Verbundmaterialien nicht genutzt werden können (z.B. da sie Gefahrenstoffe oder giftige Materialien enthalten). Außerdem ermöglichen Ausführungsbeispiele eine höhere chemische Stabilität und sind kostengünstiger.

### Kurzbeschreibung der Figuren

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein Flussdiagramm eines Verfahrens gemäß einem Ausführungsbeispiel der vorliegenden Erfindung.
- Fig. 2: zeigt ein magnetokalorisches Verbundmaterial nach der Herstellung mit dem erfindungsgemäßen Verfahren.
- Fig. 3: zeigt einen Temperaturverlauf eines Wärmetauschers bei Ummagnetisierungen.
- Fig. 4: zeigt einen Wärmetauscher mit einem Formkörper, der gemäß Ausführungsbeispielen zur Herstellung genutzt wird.

### Detaillierte Beschreibung

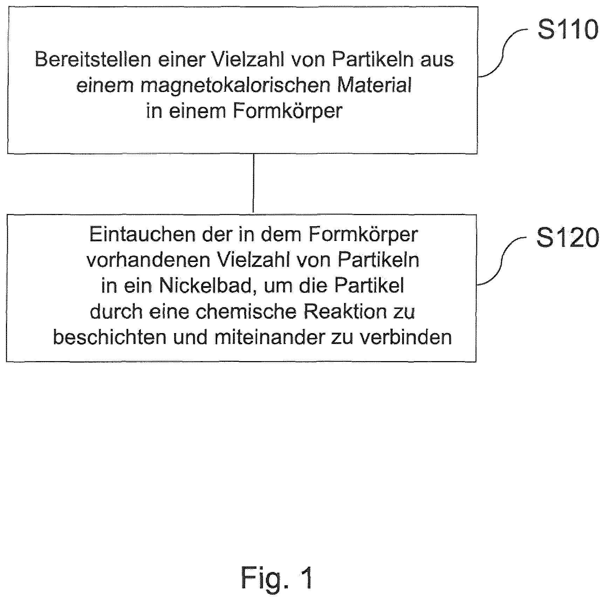

**Fig. 1** zeigt ein Flussdiagramm eines Verfahrens zur Herstellung eines magnetokalorischen Verbundmaterials für einen Wärmetauscher. Das Verfahren umfasst die Schritte:
- Bereitstellen S110 einer Vielzahl von Partikeln aus einem magnetokalorischen Material in einem Formkörper; und
- Eintauchen S120 der in dem Formkörper vorhandenen Vielzahl von Partikeln in ein Bad, um die Partikel durch eine chemische Reaktion zu beschichten und miteinander zu verbinden.

Das Bad kann insbesondere ein Nickelbad sein. Die Erfindung soll jedoch nicht auf ein Nickelbad eingeschränkt werden. Das Herstellungsverfahren kann außerdem einen oder mehrere der folgenden optionalen Schritte/Materialien aufweisen:
1. Die Partikel können mit Natriumhydroxid-Lösung (NaOH), Schwefelsäure (H₂SO₄) und Salzsäure (HCl) vorbehandelt werden (zwischen jedem Schritt kann mit Ethanol (C₂H₆O) und Wasser (H₂O) mehrfach gespült werden). Eine zusätzliche Vorbehandlung für wenige Stunden in N-Methyl2pyrrolidon, um Polymerrückstände zu entfernen, kann vorgenommen werden.
2. Das beispielhafte Nickelbad kann aus Nickel(II)-chlorid (NiCl₂), Ammoniumchlorid (NH₄Cl), Natriumcitrat (Na₃C₆H₅O₇) und Wasser (H₂O) angerührt und auf ca. 60 °C erwärmt werden.
3. Ammoniak (NH₃) und anschließend Natriumphosphinat (NaH₂PO₂) kann hinzugeben werden.
4. Vorbehandelte Partikel können dann dem beispielhaften Nickelbad ausgesetzt werden.

Durch die chemische Reaktion der Partikeloberfläche der magnetokalorischen Partikel 110 mit der beispielhaften Nickel-Lösung (Nickelbad) lassen sich die magnetokalorischen Partikeln 110 zu einer porösen Struktur verbinden. Gleichzeitig wird durch diese Reaktion eine vollkommene oder gleichmäßige Beschichtung jedes Partikels gewährleistet, die somit vor sämtlichen chemischen Angriffen geschützt sind. Außerdem sind keine giftigen Komponenten enthalten, so dass das magnetokalorische Verbundmaterial für viele Einsatzzwecke geeignet ist.

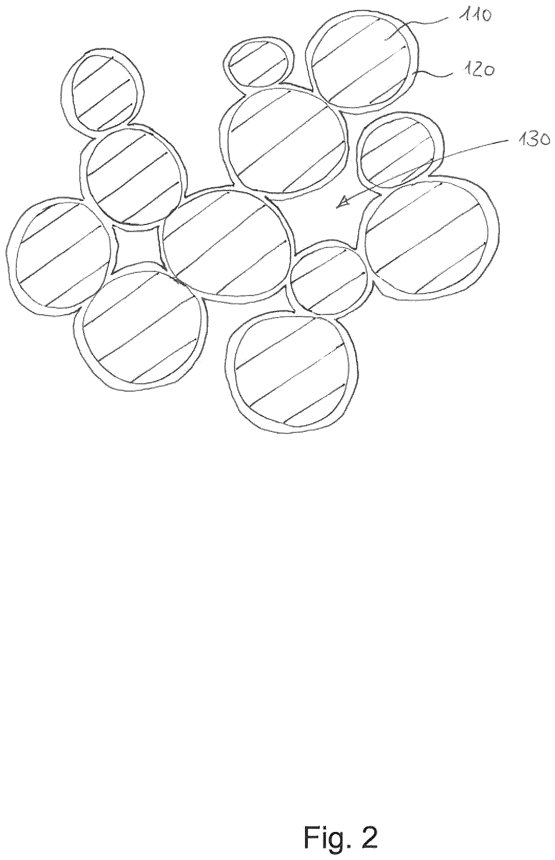

**Fig. 2** zeigt beispielhaft ein hergestelltes magnetokalorisches Verbundmaterial mit einer Vielzahl von magnetokalorischen Partikeln 110, die durch ein Eintauchen in das beispielhafte Nickelbad einen Nickelüberzug 120 (oder eine andere Metalloberfläche) aufweisen, der gleichzeitig der Verbindung der Vielzahl von Partikeln 110 dient. Als Folge dieses Verfahrens sind zwischen den vernickelten Partikeln 110. mehrere Hohlräume 130 vorhanden, die dazu dienen können, um dort eine Flüssigkeit wie beispielsweise Wasser hindurch zu pumpen und dadurch einen Wärmetauscher zu erzeugen. So kann beispielsweise das magnetokalorische Material unter Einwirkung des Magnetfeldes aufgeheizt werden und anschließend eine Flüssigkeit wie Wasser hindurchgepumpt werden, die die Wärme aufnimmt. Anschließend erfolgt eine Abkühlung durch einen Entmagnetisierungsschritt. Die dadurch erzeugte Abkühlung kann wiederum durch Wasser aufgenommen werden und dann an das zu kühlende Medium weitergeleitet werden.

Für die potentielle Anwendung von magnetokalorischen Materialien in Kühlsystemen, haben sich La(Fe,Mn,Si)₁₃H Wärmetauscher aufgrund ihres hervorragenden Eigenschaftsprofils besonders bewährt. Die Erfindung soll jedoch nicht auf das genutzte Material eingeschränkt werden. Weitere Materialien wären z.B. Gadolinium, Fe2P oder Ni-Mn-In Heusler Verbindungen.

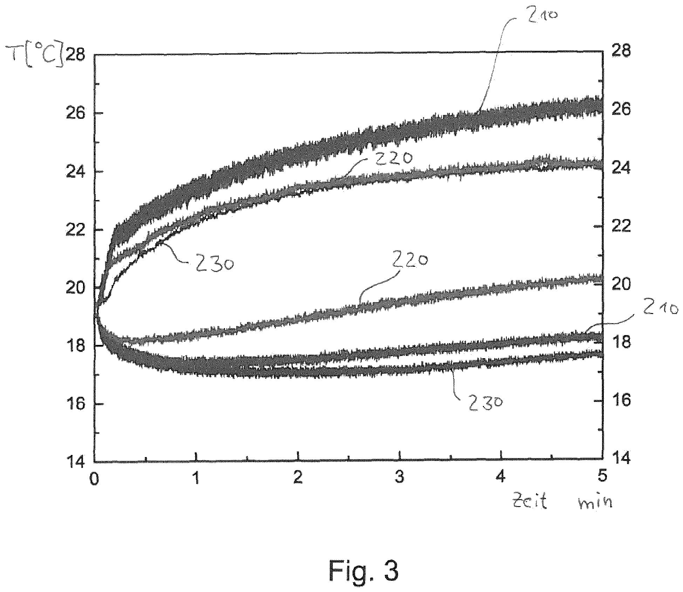

**Fig. 3** zeigt beispielhaft einen Temperaturverlauf aus Demonstrator-messungen baugleicher Wärmetauscher. Der Graph 210 zeigt den erfindungsgemäßen Wärmetauscher basierend auf vernickelten Partikeln, der Graph 220 zeigt den Wärmeverlauf basierend auf einer Polymerbindung und der Graph 230 zeigt den Wärmeverlauf basierend auf einer Kugelschüttung (ohne Bindung). Die Differenz zwischen den jeweils zwei Graphen zeigt die erreichbare Temperaturdifferenz zwischen der magnetisierten und entmagnetisierten Form an. Es ist klar ersichtlich, dass durch die Vernickelung eine größere Temperaturdifferenz erreichbar ist, als beispielsweise durch die Polymerbindung der magnetokalorischen Partikel. Dank der gesteigerten Wärmeübertragung wird bei Ausführungsbespielen der vorliegenden Erfindung (Graph 20) wesentlich schneller die Sättigung erreicht. Gleichzeitig wird ein höherer Temperaturunterschied erzeugt. Dementsprechend arbeitet der Wärmetauscher effizienter.

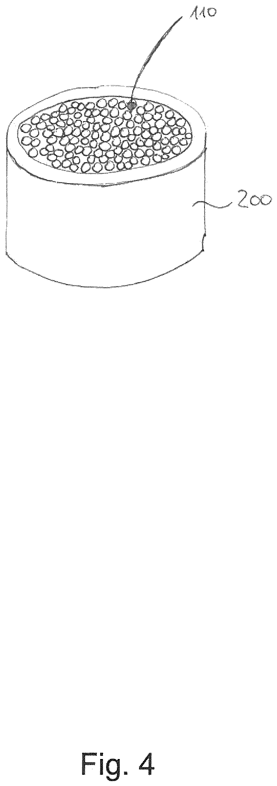

**Fig. 4** zeigt das Beispiel eines Wärmetauschers mit einem Formkörper 200, in dem die Vielzahl von Partikeln 110 eingebracht sind. Nachdem die Partikeln 110 in dem Formkörper 200 eingebracht sind, werden sie einem beispielhaften Nickelbad ausgesetzt, was zu einer Verbindung der Partikel führt.

Die Struktur der Wärmetauscher und die Verbindung der Partikel 110 untereinander haben wesentlichen Einfluss auf die Effizienz bei dynamischen Kühlprozessen, Wärmeleitfähigkeit, sowie mechanische und chemische Stabilität. Dies trifft besonders beim Einsatz in Kühlaggregaten zu.

Das erfindungsgemäße Herstellungsverfahren bietet im Vergleich zu bekannten Lösungen eine Reihe von Vorteilen. So findet beim Vernickeln mit der oben genannten Nickel-Lösung eine chemische Reaktion an den Partikeloberflächen statt, wodurch diese mit einer gleichmäßigen Nickelschicht 120 überzogen und miteinander verbunden werden. Der Prozess ist vergleichsweise simpel und benötigt nur wenige Gerätschaften.

Die Fertigung von Wärmetauschern aus vernickelten magnetokalorischen Partikeln 110 ist im Gegensatz zu den konventionellen, magnetokalorischen Verbundmaterialien, die auf Metall- und Polymer-gebundenen Kompositen basieren, wesentlich kostengünstiger. Die zur Herstellung genutzten Substanzen sind kostengünstig erhältlich und nicht giftig. Die erreichbare höhere mechanische und chemische Stabilität garantiert einen längeren Nutzungszeitraum und eine Wiederverwendung. Das magnetokalorische Verbundmaterial kann insbesondere für magnetische Kühlaggregate und Kühlsysteme genutzt werden, aber auch zur Charakterisierung für neue magnetokalorische Materialien als Wärmetauscher.

### Bezugszeichenliste

- 110: magnetokalorische Partikel
- 120: Metalloberflächenschicht
- 130: Hohlräume
- 210, 220, 230: Temperaturverläufe
- 200: Formkörper

## Patentansprüche

1. Verfahren zur Herstellung eines magnetokalorischen Verbundmaterials für einen Wärmetauscher, mit folgenden Schritten:
Bereitstellen (S110) einer Vielzahl von Partikeln (110) aus einem magnetokalorischen Material in einem Formkörper (200);
Eintauchen (S120) der in dem Formkörper (200) vorhandenen Vielzahl von Partikeln (110) in ein Bad, um die Partikel in dem Bad durch eine chemische Metallbeschichtung zu einem Verbundmaterial zusammenzufügen.

2. Verfahren nach Anspruch 1, wobei die Partikel (110) mit zumindest einem der folgenden Schritte vorbehandelt werden:
- Vorbehandeln mit einer Natriumhydroxid-Lösung,
- Vorbehandeln mit einer Schwefelsäure,
- Vorbehandeln mit einer Salzsäure,
wobei zwischen jedem Schritt mit Ethanol und/oder Wasser gespült wird.

3. Verfahren nach Anspruch 1 oder Anspruch 2, wobei die Vielzahl von Partikeln (110) in N-Methyl2pyrrolidon für zumindest eine Stunde vorbehandelt werden.

4. Verfahren nach einem der vorgehenden Ansprüche, wobei das Bad zumindest eines der folgenden Stoffe umfasst: Ammoniumchlorid, Natriumcitrat, Nickel(II)-chlorid, oder andere Metallionen, insbesondere aus Verbindungen mit Chrom oder Zink, und Wasser,
und wobei das Verfahren weiter ein Aufwärmen des Bades auf mehr als 50°C oder ungefähr 60°C umfasst.

5. Verfahren nach einem der vorhergehenden Ansprüche, wobei zu dem Bad weiter Ammoniak und anschließend Natriumphosphinat hinzugegeben wird.

6. Wärmetauscher mit einem magnetokalorischen Material, hergestellt mittels des Verfahrens des Anspruchs 1, das aus einer Vielzahl von magnetokalorischen Partikeln (110) besteht, die durch eine chemische Metallbeschichtung zu einem Verbundmaterial zusammengefügt sind.

## Claims

1. Process for producing a magnetocaloric composite material for a heat exchanger, comprising the following steps:
providing (S110) a multiplicity of particles (110) of a magnetocaloric material in a shaped body (200);
immersing (S120) the multiplicity of particles (110) present in the shaped body (200) in a bath in order to bond the particles to each other by a chemical metal coating in the bath, forming a composite material.

2. Process according to Claim 1, wherein the particles (110) are pretreated with at least one of the following steps:
- Pretreatment with a sodium hydroxide solution,
- Pretreatment with a sulfuric acid,
- Pretreatment with a hydrochloric acid,
wherein rinsing with ethanol and/or water is carried out between each step.

3. Process according to Claim 1 or Claim 2, wherein the multiplicity of particles (110) are pretreated for at least one hour in N-methyl-2-pyrrolidone.

4. Process according to any one of the preceding claims wherein the bath comprises at least one of the following substances: ammonium chloride, sodium citrate, nickel (II) chloride, or other metal ions, in particular compounds containing chromium or zinc, and water, and wherein the process further comprises warming the bath to more than 50°C or about 6o°C.

5. Process according to any one of the preceding claims, wherein further ammonia and then sodium phosphinate is added to the bath.

6. Heat exchanger with a magnetocaloric material that is produced by the process of Claim 1, consisting of a multiplicity of magnetocaloric particles (110), which have been bonded to each other by a chemical metal coating to form a composite material.

## Revendications

1. Procédé, destiné à produire une matière composite magnétocalorique pour un échangeur de chaleur, comprenant les étapes suivantes consistant à :
mettre à disposition (S110) une pluralité de particules (110) en une matière magnétocalorique dans un corps moulé (200) ;
immerger (S120) la pluralité de particules (110) présente dans le corps moulé (200) dans un bain, pour assembler les particules dans le bain en une matière composite, par un revêtement métallique chimique.

2. Procédé selon la revendication 1, les particules (110) étant prétraitées par au moins l'une des étapes suivantes consistant à :
- prétraiter à l'aide d'une solution d'hydroxyde de sodium,
- prétraiter à l'aide d'un acide sulfurique,
- prétraiter à l'aide d'un acide chlorhydrique,
entre chaque étape étant réalisé un rinçage à l'éthanol et/ou à l'eau.

3. Procédé selon la revendication 1 ou la revendication 2, la pluralité de particules (110) étant prétraitée pendant au moins une heure dans un N-méthyl-2-pyrrolidone.

4. Procédé selon l'une quelconque des revendications précédentes, le bain comprenant au moins l'une des substances suivantes : le chlorure d'ammonium, le citrate de sodium, le chlorure (II) de nickel, ou d'autres ions métalliques, notamment à partir de composés comprenant du chrome ou du zinc et de l'eau,
et le procédé comprenant par ailleurs une mise en température du bain à plus de 50°C ou à environ 60°C.

5. Procédé selon l'une quelconque des revendications précédentes, au bain étant rajouté par ailleurs de l'ammoniac et ensuite un phosphinate de sodium.

6. Échangeur de chaleur pourvu d'une matière magnétocalorique, produit au moyen du procédé selon la revendication 1, qui est constitué d'une pluralité de particules (110) magnétocaloriques, qui sont assemblées en une matière composite par un revêtement métallique chimique.
